## Europäisches Patentamt
## European Patent Office
## Office européen des brevets

(19)

(11) Numéro de publication: **0 076 484**
**B1**

# (12) FASCICULE DE BREVET EUROPEEN

(45) Date de publication du fascicule du brevet:
27.12.85

(21) Numéro de dépôt: **82109079.2**

(22) Date de dépôt: **01.10.82**

(51) Int. Cl.⁴: **F 23 G 5/00**

(54) Installation de pyrolyse, notamment pour des déchets végétaux tels que des coques ou des enveloppes de graines, et procédé de fonctionnement.

(30) Priorité: **02.10.81 FR 8119120**

(43) Date de publication de la demande:
**13.04.83 Bulletin 83/15**

(45) Mention de la délivrance du brevet:
**27.12.85 Bulletin 85/52**

(84) Etats contractants désignés:
**BE DE FR GB IT LU NL**

(56) Documents cités:
**DE - B - 1 128 588**
**DE - C - 658 718**
**DE - C - 966 644**
**FR - A - 2 271 518**
**FR - A - 2 295 369**
**GB - A - 1 019 613**

(73) Titulaire: **COMMUNAUTE EUROPEENNE DE L'ENERGIE ATOMIQUE (EURATOM), Bâtiment Jean Monnet Plateau du Kirchberg Boîte Postale 1907, L-1019 Luxembourg (LU)**

(72) Inventeur: **Bonnaure, Pierre, via Milano 1, I-21027 Ispra Varese (IT)**
Inventeur: **Bulhon, Jean, Domaine Fromenteaux, F-63190 Lezoux (FR)**
Inventeur: **Guillot, Jack, 19, rue Voltaire, F-91760 Juvisy sur Orge (FR)**

(74) Mandataire: **Weinmiller, Jürgen, Zeppelinstrasse 63, D-8000 München 80 (DE)**

BUNDESDRUCKEREI BERLIN

## Description

La présente invention concerne une installation selon le préambule de la revendication 1, permettant d'effectuer la pyrolse des déchets végétaux tels que des coques, des enveloppes de graines, ou autres déchets lignocellulosiques, ainsi que le procédé de fonctionnement de cette installation.

Une telle installation est connue, par exemple à partir du document DE-B-1 128 588. Cette installation comporte d'une part un canal central d'insertion des produits combustibles, qui mène vers une chambre central de combustion où s'effectue une combustion incomplète accompagnée d'une décomposition chimique, et d'autre part une chambre périphérique entourant ledit canal et assurant une combustion complète des produits de décomposition. La paroi séparant le canal d'insertion et la chambre périphérique est constituée de tubes d'alimentation en air, ces tubes étant munis d'orifices d'injection d'air vers ledit canal et vers ladite chambre.

L'invention a pour but d'augmenter le volume utilisable pour la combustion incomplète et ainsi d'augmenter la capacité du four sans pour autant augmenter l'encombrement de l'installation.

Ce but est atteint par l'installation telle qu'elle est définie dans la revendication 1. Grâce notamment aux passages entre le canal central et la chambre périphérique, le canal s'intègre fonctionnellement dans la chambre de combustion incomplète.

Certaines caractéristiques d'une mise en œuvre préférée de l'invention sont décrites dans les sous-revendications.

Il est à noter ici qu'on connaît en outre par le document DE-C-966 644 une centrale électrique avec une chambre de combustion unique, qui est alimentée en schiste bitumineux et dont les gaz de combustion entraînent l'étage haute pression d'une turbine. Un compresseur monté sur l'arbre de la turbine fournit de l'air comprimé à cette chambre de combustion.

Un procédé pour le fonctionnement de l'installation de pyrolyse suivant l'invention est caractérisé en ce que la chaleur provenant notamment du rayonnement de la structure annulaire creuse séparant la chambre centrale de la chambre périphérique provoque la décomposition chimique ou »cracking« des produits traités.

Suivant une caractéristique supplémentaire de l'invention, l'air de combustion envoyé au four est environ à 200°C, sous une pression d'environ 4 bars, les gaz de combustion issus du four étant sous une pression très légèrement inférieure, et à une température d'environ 900°C.

Le dessin annexé, donné à titre d'exemple non limitatif, permettra de mieux comprendre les caractéristiques de l'invention.

Figure 1 est une vue d'ensemble d'une installation de pyrolyse suivant l'invention.

Figure 2 est une vue du four de l'installation, en section suivant un plan contenant l'axe du four.

Figure 3 est une section partielle III-III (fig. 2).

Figure 4 est une vue partielle en perspective de la structure annulaire creuse du four.

Figure 5 est une vue d'ensemble d'une installation de pyrolyse suivant une variante de l'invention.

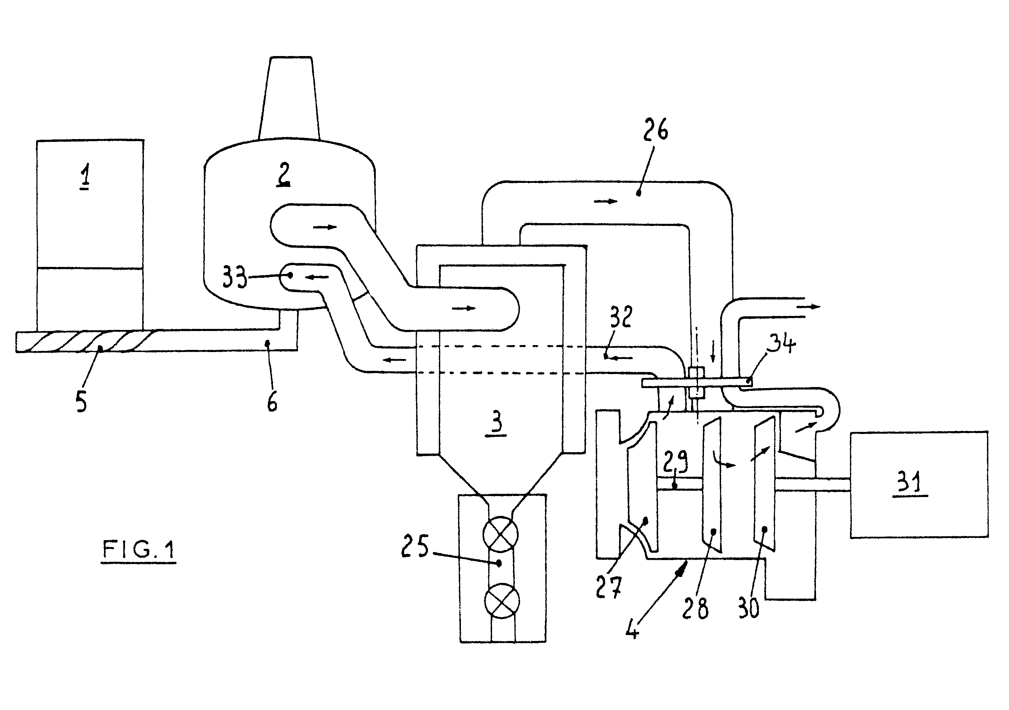

On a représenté sur la figure 1 une installation de pyrolyse suivant l'invention. Cette installation comprend principalement un silo de stockage 1, un four 2, un séparateur à cyclone 3, et une turbine à gaz 4.

Le silo 1 permet le stockage des matières à traiter. Dans sa partie inférieure, il comporte une vis d'alimentation 5 qui entraîne de force les matières dans un conduit 6 suivant un débit réglable de façon assez précise, ce débit dépendant de la vitesse de rotation de la vis, et restant toujours assez faible.

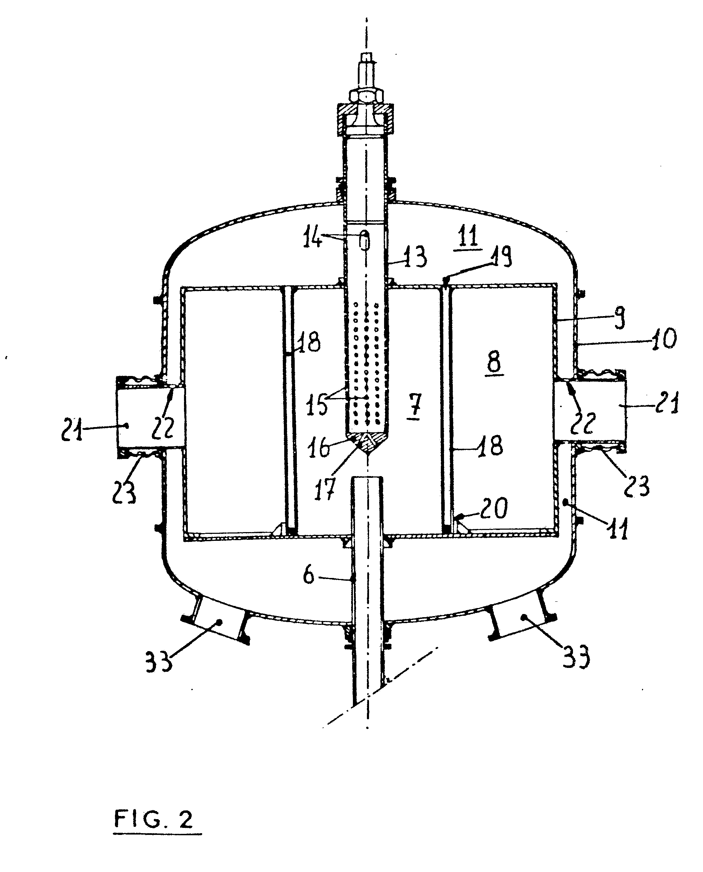

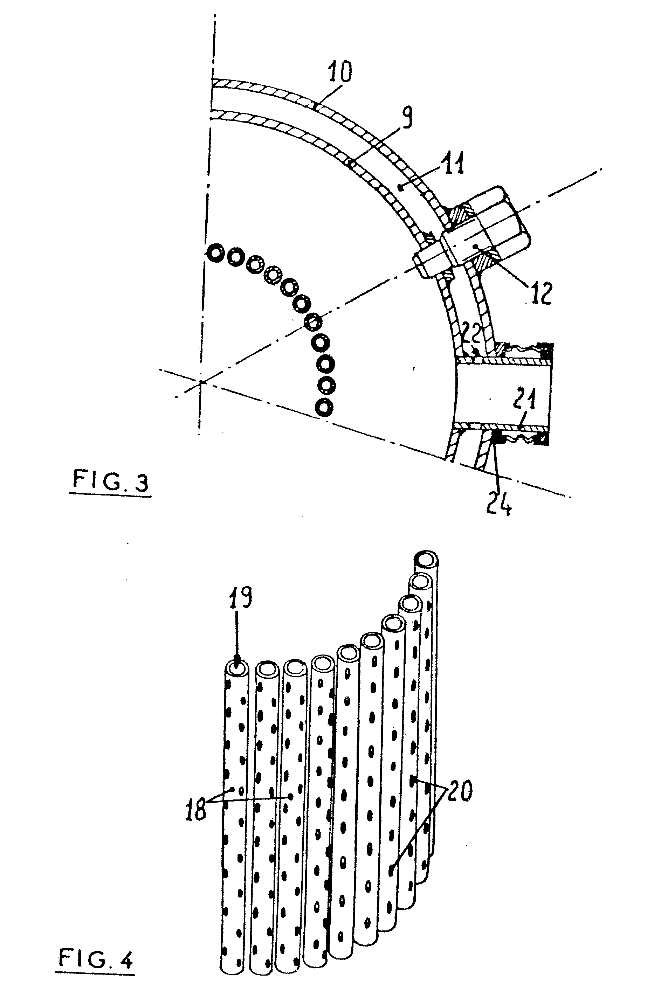

Le four 2 est visible en détail sur les figures 2 à 4. Il comprend une chambre cylindrique centrale 7 et une chambre annulaire 8 délimitées à l'intérieur d'un même tambour 9. Le tambour 9 est situé lui-même à l'intérieur d'un carter externe 10 définissant autour du tambour 9 un espace 11. La liaison mécanique entre le tambour 9 et le carter 10 est établie:

— au moyen de vis à téton 12 à orientation radiale par rapport à l'axe du four,
— au moyen de l'extrémité libre du conduit 6, qui est coaxiale avec le four et qui pénètre à l'intérieur de la chambre centrale 7 en passant par le bas,
— au moyen d'une portion de tube 13 qui est également coaxiale avec le four, et qui pénètre à l'intérieur de la chambre centrale 7 en passant par le haut.

La portion de tube 13 est utilisée pour injecter dans la chambre centrale 7 un flux d'air primaire de combustion. Cette portion de tube comprend d'une part, en regard de l'espace 11, plusieurs lumières 14, et d'autre part, à l'intérieur de la chambre centrale 7, une série de petits orifices de distribution d'air 15. L'extrémité inférieure de la portion de tube 13 est obturée par un bouchon 16 pourvu d'orifices de distribution d'air 17.

La chambre centrale 7 est séparée de la chambre annulaire 8 par une structure annulaire creuse composée d'une série de petites portions de tubes 18 parallèles à l'axe du four. Cette structure annulaire creuse est utilisée pour injecter dans la chambre annulaire 8 un flux d'air secondaire de combustion. Pour cela, chaque petite portion de tube 18 comporte d'une part une extrémité supérieure 19 ouverte à pleine section dans l'espace 11, et d'autre part une série de petits orifices de distribution d'air 20 débouchant dans la chambre annulaire 8.

Deux conduits 21 s'ouvrent radialement sur la paroi externe cylindrique de la chambre annulaire 8 en des emplacements diamétralement opposés pour assurer l'évacuation des gaz brûlés.

Ces conduits sont pourvus d'orifices 22 permettant l'entrée d'air tertiaire de combustion en provenance de l'espace 11. Chaque conduit 21 est entouré par un joint tubulaire à soufflet 23 reliant ledit conduit 21 au carter externe 10, tandis que chaque conduit 21 coulisse librement à l'intérieur d'un large orifice 24 du carter externe 10. Cette disposition permet de garantir la fermeture étanche de l'espace 11 tout en autorisant le jeu des dilatations entre le tambour 9 et le carter 10.

Les conduits 21 sont reliés aux orifices d'entrée du séparateur à cyclone 3 qui comporte à sa partie inférieure un sas 25 pour l'évacuation des poussières et des diverses particules solides contenues dans les gaz de combustion. Le conduit de sortie 26 du séparateur à cyclone 3 se dirige vers l'étage à haute pression de la turbine à gaz 4.

De façon classique, l'étage à haute pression de la turbine 4 renferme une roue de compresseur 27 entraînée en rotation par une roue à haute pression 28, par l'intermédiaire d'un arbre 29. L'étage à basse pression de la turbine comprend une roue à basse pression 30 susceptible d'entraîner un alternateur 31.

Les gaz provenant du conduit 26 sont dirigés sur les aubages de la roue à haute pression 28, tandis que l'air atmosphérique aspiré par le compresseur est comprimé dans un conduit 32 qui débouche en deux emplacements 33 dans le fond du carter 10 du four 2.

La turbine peut éventuellement être associée à un échangeur de chaleur 34 muni d'un disque poreux qui tourne constamment, et qui est traversé parallèlement à son axe d'une part par le circuit de gaz d'échappement de la turbine et d'autre part par le circuit d'air comprimé du conduit 32.

Le fonctionnement est le suivant:

L'espace 11 du four 2 est alimenté en permanence en air de combustion sous une pression d'environ 4 bars, et à une température d'environ 200°C. L'air atmosphérique compressé dans le compresseur de la turbine a éventuellement été réchauffé dans l'échangeur de chaleur 34 par la chaleur récupérée dans les gaz d'échappement.

La combustion des matières à traiter commence à se produire dans la chambre centrale 7, en présence du flux d'air primaire issu des orifices 15 et 17, et dans les conditions suivantes:

— la quantité d'air étant volontairement limitée, la combustion est obligatoirement incomplète,
— cette combustion a lieu par ailleurs à une température élevée, par exemple de l'ordre de 600 à 800°C, la chaleur étant notamment entretenue par le rayonnement de petites portions de tube 18. La température élevée provoque une décomposition chimique des matières.

Cette combustion incomplète accompagnée de décomposition chimique constitue une réaction de pyrolyse. La décomposition des matières organiques, ou »cracking« conduit à des produits plus lourds, et à des produits plus légers constitués par des gaz hydrocarbures tous combustibles. Ainsi, la combustion finale est complète grâce à l'apport d'air secondaire par les petites portions de tube 18, et à l'apport d'air tertiaire par les orifices 22. Dans la chambre annulaire 8, on obtient une température de 200°C à la flamme, tandis que les gaz d'échappement envoyés dans les conduits 21 sont à environ 900°C.

Il ne reste dans le four 2 que des cendres minérales inertes qu'on peut évacuer de temps à autre par une trappe de visite non représentée. Ces cendres minérales solides ne sont pas polluantes, contrairement aux cendres qui renferment des particules de goudron et autres imbrûlés.

On note que le fonctionnement de la turbine à gaz reste classique, le four 2 étant simplement utilisé à la manière d'une chambre de combustion.

L'installation permet la production d'énergie électrique par l'intermédiaire de l'alternateur 31. L'électricité est une forme noble d'énergie qui peut être facilement transportée et utilisée avec un bon rendement, alors que les procédés classiques de destruction des déchets végétaux ne permettaient qu'une récupération éventuelle d'énergie calorifique difficile à utiliser avec un bon rendement.

Accessoirement, on peut aussi récupérer les gaz d'échappement de la turbine, c'est-à-dire les gaz provenant de l'étage à basse pression de la turbine, ces gaz étant préalablement passés successivement sur les aubages de la roue à haute pression 28 et sur les aubages de la roue à basse pression 30 ainsi que dans l'échangeur thermique 34, et sortant à une température de l'ordre de 500 à 600°C sous une pression d'environ 1,05 bars. Ces gaz propres, constitués essentiellement par du gaz carbonique $CO_2$ et de la vapeur d'eau, peuvent être dirigés vers une chaudière à vapeur ou vers un séchoir.

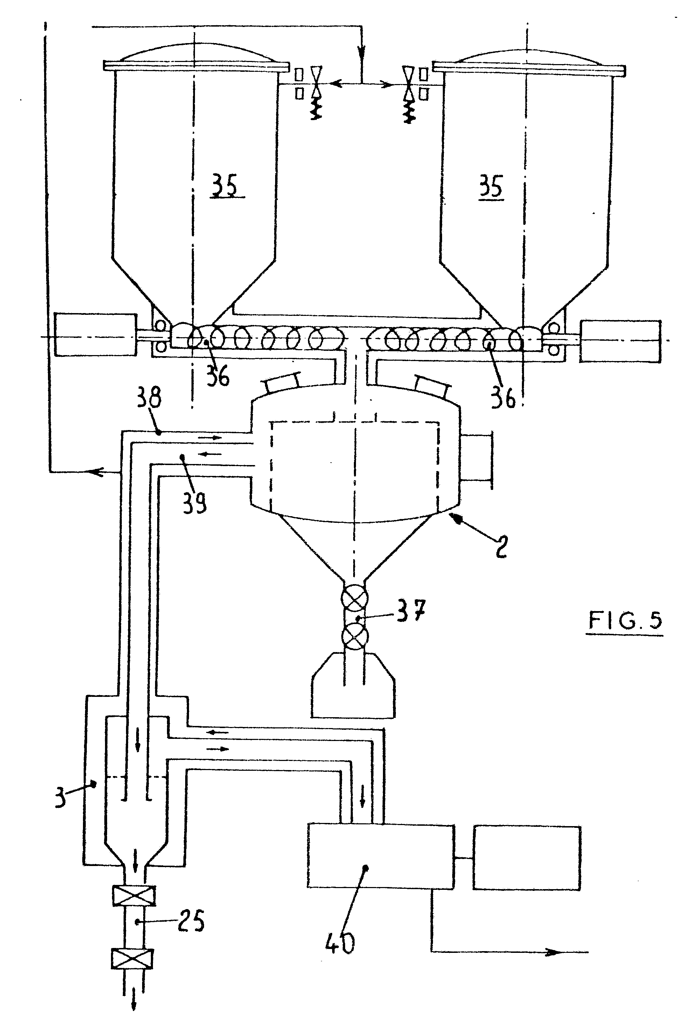

Suivant une variante illustrée sur la figure 5, l'alimentation du four 2 peut être réalisée par le haut. Ici, on a prévu deux citernes 35 associées chacune à une vis d'alimentation 36. En outre, un sas 37 placé à la partie inférieure du four permet de récupérer les cendres de la combustion sans interrompre le fonctionnement.

Dans ce cas, l'air atmosphérique comprimé et les gaz brûlés circulent à contre-courant entre le four 2 et la chaudière 40 dans des canalisations coaxiales 38 et 39. Le réchauffement de l'air atmosphérique comprimé s'effectue durant le passage dans la canalisation 38 au contact de la canalisation 39 dans laquelle les gaz d'échappement s'écoulent.

On ne sortirait pas du domaine de l'invention en effectuant diverses modifications mineures du dispositif décrit, par exemple en associant la même turbine à plusieurs fours, ou en remplaçant la structure annulaire creuse comprenent les petites portions de tube 18 par une autre structure à double paroi capable de laisser passer un flux transversal, par exemple une grille en nids d'abeilles ou une structure ondulée à double paroi.

On note que le four à pyrolyse est toujours sous pression. Dans le cas d'un fonctionnement en »chaudière à vapeur«, le four à pyrolyse peut être alimenté par un ventilateur, la pression étant alors de l'ordre de 100 à 200 millimètres d'eau.

L'installation de pyrolyse suivant l'invention présente notamment les avantages suivants:

— la combustion finale très complète assure un gain d'énergie par rapport aux procédés traditionnels d'élimination des matières végétales combustibles,

— la combustion très complète est une combustion propre non polluante, tant en ce qui concerne les gaz dégagés, constitués essentiellement par du gaz carbonique et de la vapeur d'eau, qu'en ce qui concerne les cendres minérales solides inertes recueillies,

— l'énergie fournie par l'installation se présente sous la forme la plus intéressante pour l'utilisateur, y compris si nécessaire sous forme d'énergie électrique qui est une forme noble d'énergie.

En outre, l'invention n'est pas limitée au traitement des déchets végétaux, l'installation de pyrolyse pouvant servir pour traiter aussi bien du charbon pulvérisé, des huiles très lourdes ou les combustibles les plus divers.

**Revendications**

1. Installation de pyrolyse comprenant au moins un four (2) avec une chambre centrale (7) où s'effectue une combustion incomplète accompagnée d'une décomposition chimique, et une chambre périphérique coaxiale (8) où s'effectue une combustion complète des produits de décomposition, la séparation entre les deux chambres (7, 8) étant obtenue par une structure creuse (18) permettant d'injecter de l'air comprimé dans ladite chambre périphérique, caractérisée en ce qu'elle comprend en outre une turbine à gaz (4) pour laquelle le ou les fours (2) jouent le rôle de chambres de combustion, un compresseur (27) propulsé par ladite turbine alimentant le ou les fours (2) en air comprimé et chaud, et que ladite structure creuse permet le passage des gaz combustibles de la chambre centrale (7) à la chambre périphérique (8).

2. Installation de pyrolyse suivant la revendication 1, caractérisée en ce qu'elle comprend un échangeur de chaleur (34) pourvu d'un disque poreux tournant qui est traversé parallèlement à son axe d'une part par le circuit des gaz d'échappement issus de la turbine (4) et d'autre part par le circuit d'air comprimé allant du compresseur (27) de la turbine (4) au four (2), l'air comprimé étant réchauffé par des calories prélevées au sein des gaz d'échappement.

3. Installation de pyrolyse suivant l'une quelconque des revendications précédentes, caractérisée en ce que les produits à traiter sont stockés dans un silo (1), (35) et sont amenés jusqu'à la chambre centrale (7) du four (2) par l'intermédiaire d'un dispositif d'alimentation en continu muni d'une vis d'alimentation (5), (36).

4. Installation de pyrolyse suivant l'une quelconque des revendications précédentes, caractérisée en ce que la chambre centrale (7) et la chambre périphérique (8) du four (2) sont délimitées à l'intérieur d'un même tambour (9) où la chambre centrale cylindrique (7) et la chambre périphérique annulaire (8) sont coaxiales, ce tambour (9) étant lui-même situé à l'intérieur d'un carter externe (10) du four (2) tandis que l'air provenant du compresseur (27) de la turbine (4) arrive dans l'espace (11) délimitée entre le tambour (9) et le carter externe (10) du four (2), l'air nécessaire à la combustion étant prélevé dans ledit espace (11) appelé espace relais.

5. Installation de pyrolyse suivant la revendication 4, caractérisée en ce qu'un flux d'air primaire de combustion est établi à l'aide d'une portion de tube (13) qui traverse la paroi du tambour (9) et qui s'étend axialement dans le four (2), cette portion de tube (13) comportant d'une part, en regard de l'espace relais, des lumières (14) d'entrée d'air, et d'autre part, à l'intérieur de la chambre centrale cylindrique (7) du four (2), une série de petits orifices (15) d'alimentation d'air.

6. Installation de pyrolyse suivant la revendication 1, caractérisée en ce que la structure annulaire creuse est constituée par une série de petites portions de tubes (18) parallèles à l'axe du four (2), chaque petite portion de tube (18) comportant d'une part au moins une extrémité (19) débouchant à pleine ouverture à l'intérieur de l'espace relais (11), et d'autre part une série de petits orifices (20) d'alimentation d'air débouchant à l'intérieur de la chambre annulaire (8).

7. Installation de pyrolyse suivant l'une quelconque des revendications 4 à 6, caractérisée en ce que le four (2) comporte au moins un conduit (21) d'évacuation de gaz de combustion qui s'ouvre radialement sur la paroi cylindrique externe (9) de la chambre annulaire (8), et qui est pourvu d'orifices (22) pour l'entrée d'air tertiaire de combustion en provenance de l'espace relais (11).

8. Installation de pyrolyse suivant la revendication 7, caractérisée en ce que chaque conduit (21) d'évacuation des gaz de combustion traverse avec un jeu important un trou (24) prévu dans la paroi latérale du carter externe (10) du four (2), et est relié à ladite paroi (10) par l'intermédiaire d'un joint tubulaire à soufflet (23), ce joint assurant la fermeture étanche de l'espace relais (11) tout en autorisant le jeu des dilatations entre le tambour (9) et le carter externe (10) du four (2).

9. Installation de pyrolyse suivant l'une quelconque des revendications précédentes, caractérisée en ce que les gaz de combustion traversent un séparateur à cyclone (3) dans lequel ils se séparent des poussières et particules diverses avant d'être envoyés sur les aubages de la roue à haute pression (28) de la turbine (4), un sas (25) étant prévu dans la partie inférieure du séparateur (3) pour l'évacuation desdites poussières et particules.

10. Installation de pyrolyse suivant l'une quelconque des revendications précédentes, caractérisée en ce que les circulations de gaz brûlés et d'air atmosphérique comprimé ont lieu à contrecourant dans des canalisations coaxiales (38), (39) entre la turbine à gaz (4) et le four (2), cette disposition permettant des échanges thermiques entre les deux circuits de gaz et d'air.

11. Procédé pour le fonctionnement de l'installation de pyrolyse suivant l'une quelconque des revendications précédentes, caractérisé en ce que l'air de combustion est envoyé au four (2) à environ 200°C, sous une pression d'environ 4 bars, les gaz de combustion issus du four (2) étant sous une pression très légèrement inférieure, et à une température d'environ 900°C.

12. Procédé pour le fonctionnement le l'installation de pyrolyse suivant la revendication 1, caractérisé en ce que la chaleur provenant de la combustion incomplète des matières dans la chambre centrale cylindrique (7) et du rayonnement de la structure annulaire creuse (18) séparant la chambre centrale (7) de la chambre périphérique (8) provoque la décomposition chimique ou »cracking« des produits traités, les produits de la décomposition étant tous brûlés complètement dans le four (8).

**Patentansprüche**

1. Pyrolyseanlage, bestehend mindestens aus einem Ofen (2) mit einer zentralen Kammer (7), in der eine unvollständige Verbrennung in Verbindung mit einer chemischen Zersetzung erfolgt, und mit einer koaxialen peripheren Kammer (8), in der eine vollständige Verbrennung der Zersetzungsprodukte erfolgt, wobei die Trennung zwischen den beiden Kammern (7, 8) durch eine Hohlstruktur (18) bewirkt wird, die es ermöglicht, Druckluft in die periphere Kammer einzuspeisen, dadurch gekennzeichnet, daß die Anlage außerdem eine Gasturbine (4) enthält für die der Ofen bzw. die Öfen (2) die Rolle von Verbrennungskammern übernehmen, wobei ein von der Turbine angetriebener Kompressor (27) den Ofen oder die Öfen (2) mit heißer Druckluft versorgt, und daß die Hohlstruktur den Durchlaß von brennbaren Gasen von der zentralen Kammer (7) zur peripheren Kammer ermöglicht.

2. Pyrolyseanlage nach Anspruch 1, dadurch gekennzeichnet, daß sie einen Wärmetauscher (34) mit einer porösen Drehscheibe enthält, die parallel zu ihrer Achse einerseits von der Auslaßgasleitung der Turbine (4) und andererseits von der Druckluftleitung durchzogen wird, die vom Kompressor (27) der Turbine (4) zum Ofen (2) führt, wobei die Druckluft von den aus den Auslaßgasen entnommenen Kalorien aufgeheizt wird.

3. Pyrolyseanlage nach einem beliebigen der vorhergehenden Ansprüche, dadurch gekennzeichnet, daß die zu behandelnden Produkte in einem Silo (1, 35) gelagert werden und zur zentralen Kammer (7) des Ofens (2) über eine kontinuierliche Speisevorrichtung gebracht werden, die eine Speiseschraube (5, 36) enthält.

4. Pyrolyseanlage nach einem beliebigen der vorhergehenden Ansprüche, dadurch gekennzeichnet, daß die zentrale Kammer (7) und die periphere Kammer (8) des Ofens (2) innerhalb einer Trommel (9) begrenzt sind, wo die zentrale zylindrische Kammer (7) und die periphere ringförmige Kammer (9) koaxial sind, wobei die Trommel (9) selbst innerhalb einer äußeren Umhüllung (10) des Ofens liegt, während die vom Kompressor (27) der Turbine (4) kommende Luft in dem Raum (11) ankommt, der zwischen der Trommel (9) und der äußeren Umhüllung (10) des Ofens (2) liegt, wobei die für die Verbrennung notwendige Luft aus diesem Raum (11), der Relaisraum genannt wird, entnommen wird.

5. Pyrolyseanlage nach Anspruch 4, dadurch gekennzeichnet, daß ein primärer Verbrennungsluftstrom mit Hilfe eines Rohrabschnitts (13) erzeugt wird, der die Wand der Trommel (9) durchquert und axial den Ofen (2) durchzieht, wobei dieser Rohrabschnitt (13) einerseits gegenüber dem Relaisraum Lufteintrittsöffnungen (14) und andererseits im Inneren der zentralen zylindrischen Kammer (7) des Ofens (2) eine Reihe von kleinen Luftspeiseöffnungen (15) aufweist.

6. Pyrolyseanlage nach Anspruch 1, dadurch gekennzeichnet, daß die ringförmige hohle Struktur aus einer Reihe kurzer Rohrabschnitte (18) besteht, die zur Achse des Ofens (2) parallel liegen und je einerseits mindestens ein Ende (19), das voll in den Relaisraum (11) mündet, und andererseits eine Reihe kleiner Luftspeiselöcher (20) aufweisen, die ins Innere der ringförmigen Kammer (8) münden.

7. Pyrolyseanlage nach einem beliebigen der Ansprüche 4 bis 6, dadurch gekennzeichnet, daß der Ofen (2) mindestens eine Leitung (21) zur Abfuhr der Verbrennungsgase enthält, die sich radial in der äußeren zylindrischen Wand (9) der ringförmigen Kammer öffnet und die mit Löchern (22) zum tertiären Verbrennungslufteintritt aus dem Relaisraum (11) versehen ist.

8. Pyrolyseanlage nach Anspruch 7, dadurch gekennzeichnet, daß jede Leitung (21) zur Abfuhr der Verbrennungsgase mit großem Spiel ein Loch (24) in der Seitenwand der äußeren Umhüllung (10) des Ofens durchquert und an diese Wand (10) über eine Wellrohrdichtung (23) angeschlossen ist, wobei diese Dichtung des Relaisraum (11) dicht abschließt und doch die unterschiedlichen Ausdehnungen zwischen der Trommel (9) und der äußeren Umhüllung (10) des Ofens (2) zuläßt.

9. Pyrolyseanlage nach einem beliebigen der vorhergehenden Ansprüche, dadurch gekennzeichnet, daß die Verbrennungsgase einen Zyklonseparator (3) durchqueren, in dem Staub und verschiedene Festpartikel abgeschieden werden, ehe die Gase auf die Schaufeln des Hochdruckrads (28) der Turbine (4) auftreffen, wobei eine Schleuse (25) im unteren Bereich des Separators (3) zur Entfernung des Staubs und der Feststoffpartikel vorgesehen ist.

10. Pyrolyseanlage nach einem beliebigen der vorhergehenden Ansprüche, dadurch gekennzeichnet, daß die abgebrannten Gase und atmosphärische Druckluft in Gegenstrom in koaxialen Kanälen (38, 39) zwischen der Gasturbine (4) und dem Ofen (2) zirkulieren, wobei diese Anordnung einen Wärmeaustausch zwischen den beiden Kreisläufen von Gas und Luft ermöglicht.

11. Verfahren zum Betrieb der Pyrolyseanlage nach einem beliebigen der vorhergehenden Ansprüche, dadurch gekennzeichnet, daß die Verbrennungsluft dem Ofen (2) bei etwa 200° C unter einem Druck von etwa 4 Bar zugeführt wird, während die Abgase aus dem Ofen (2) bei einem leicht geringeren Druck und einer Temperatur von etwa 900° C austreten.

12. Verfahren zum Betrieb der Pyrolyseanlage nach Anspruch 1, dadurch gekennzeichnet, daß die von der unvollständigen Verbrennung der Stoffe in der zentralen zylindrischen Kammer (7) kommende Wärme und die von der Strahlung der hohlen ringförmigen Struktur (18), die die zentrale Kammer (7) von der peripheren Kammer (8) trennt, kommende Wärme die chemische Zersetzung oder das »Cracking« der behandelten Produkte bewirken, worauf die Zersetzungsprodukte alle vollständig im Ofen (9) verbrannt werden.

## Claims

1. Pyrolysis incinerator comprising at least one furnace (2) including a central chamber (7) in which an incomplete combustion accompanied by a chemical decomposition is performed, and a peripheral coaxial chamber (8), in which a complete combustion of the decomposition products is performed, the separation between both chambers (7, 8) being obtained by a hollow structure (18) making it possible to inject compressed air into said peripheral chamber, characterized in that it further comprises a gas turbine (4) for which the furnace(s) (2) act(s) as combustion chambers, a compressor (27) driven by said turbine supplying compressed and hot air to the furnace(s) (2), and that said hollow structure allows burneable gases to pass from the central chamber (7) to the peripheral chamber (8).

2. A pyrolysis incinerator according to claim 1, characterized in that it comprises a heat exchanger (34) including a porous rotating disk which is passed parallelly to its axis on the one hand by the outlet gas circuit issuing from the turbine (4), and on the other hand by the compressed air circuit between the compressor (27) of the turbine (4) and the furnace (2), the compressed air being reheated by heat quantities derived from the outlet gases.

3. A pyrolysis incinerator according to any one of the preceding claims, characterized in that the products to be treated are stored in a store (1, 35) and are transferred to the central chamber (7) of the furnace (2) through a continuous supply device provided with a supply screw (5, 36).

4. A pyrolysis incinerator according to any one of the preceding claims, characterized in that the central chamber (7) and the peripheral chamber (8) of the furnace (2) are delimited to the inside by a common drum (9) in which the central cylindrical chamber (7) and the peripheral annular chamber (8) are coaxial, said drum (9) being itself located inside an outer casing (10) of the furnace (2) whereas the air delivered by the compressor (27) of the turbine (4) arrives in the space (11) delimited between the drum (9) and the outer casing (10) of the furnace (2), the air necessary for the combustion being withdrawn from said space (11) called relay space.

5. A pyrolysis incinerator according to claim 4, characterized in that a flux of primary combustion air is established by means of a tube portion (13) which passes through the wall of the drum (9) and extends axially into the furnace (2), said tube portion (13) including on the one hand air input openings (14) facing to the relay space, and on the other hand a plurality of small air supply openings (15) inside the cylindrical central chamber (7) of the furnace (2).

6. A pyrolysis incinerator according to claim 1, characterized in that the annular hollow structure consists of a plurality of small tube portions (18) which are parallel to the axis of the furnace (2) and which comprise each on the one hand at least one end (19) communicating without restriction with the inside of the relay space (11), and on the other hand a plurality of small air supply openings (20) communicating with the inside of the annular chamber (8).

7. A pyrolysis incinerator according to any one of claims 4 to 6, characterized in that the furnace (2) comprises at least one duct (21) for evacuating combustion gases, this duct clearing radially at the outer cylindrical wall (9) of the annular chamber (8) and being provided with openings (22) for the inlet of ternary combustion air coming from the relay space (11).

8. A pyrolysis incinerator according to claim 7, characterized in that each duct (21) for evacuating combustion gases passes with an important clearance through a hole (24) installed in the lateral wall of the outer casing (10) of the furnace (2) and is connected to said wall (10) through a tubular bellow seal (23), this seal ensuring the gas-tight sealing of the relay space (11), but still allowing the differential expansions between the drum (9) and the outer casing (10) of the furnace (2).

9. A pyrolysis incinerator according to any one of the preceding claims, characterized in that the combustion gases pass through a cyclon separator (3) in which dust and different particles are separated from the gas prior to being sent to the

**0 076 484**

blades of the high pressure wheel (28) of the turbine (4), a lock (25) being provided in the lower part of the separator (3) for allowing the withdrawal of said dust and particles.

10. A pyrolysis incinerator according to any one of the preceding claims, characterized in that the burnt gases and the compressed atmospheric air are circulated in a counter-current manner in coaxial canalisations (38, 39) between the gas turbine (4) and the furnace (2), this disposition making thermal exchanges possible between the two circuits of gas and of air.

11. A method for operating the pyrolysis incinerator according to any one of the preceding claims, characterized in that the combustion air is supplied to the furnace (2) at about 200° C under a pressure of about 4 bars, the combustion gases issued by the furnace (2) being under a slightly lower pressure and a temperature of about 900° C.

12. A method for operating the pyrolysis incinerator according to claim 1, characterized in that the heat derived from the imcomplete combustion of materials in the central cylindrical chamber (7) and from the radiation of the hollow annular structure (18) between the central chamber (7) and the peripheral chamber (8) induces the treated products to be chemically decomposed or cracked, all the products of the decomposition being completely burnt in the furnace (8).

FIG.1

FIG. 2

FIG. 3

FIG. 4

FIG.5